# EUROPEAN PATENT SPECIFICATION

(11) **EP 3 051 882 B1**
(45) Date of publication and mention of the grant of the patent: **06.01.2021**
(21) Application number: 14773014.7
(22) Date of filing: 03.03.2014
(51) Int. Cl.: H04W 8/00

(54) **METHOD, APPARATUS AND SYSTEM FOR D2D DEVICE DISCOVERY**
VERFAHREN, VORRICHTUNG UND SYSTEM ZUR ERKENNUNG VON D2D-VORRICHTUNGEN
PROCÉDÉ, APPAREIL ET SYSTÈME POUR LA RECHERCHE DE DISPOSITIFS D2D

(30) Priority: 26.09.2013 CN 201310446669
(43) Date of publication of application: 03.08.2016
(73) Proprietor: ZTE Corporation, Shenzhen, Guangdong 518057 (CN)
(72) Inventor: XU, Hui, Shenzhen, Guangdong 518057 (CN)
(74) Representative: Baudler, Ron
(86) International application number: PCT/CN2014/072818
(87) International publication number: WO 2014/154080

(56) References cited:
- CN-A- 102 547 984
- CN-A- 102 711 105
- CN-A- 102 857 901
- CN-A- 103 179 575
- CN-A- 103 327 568
- US-A1- 2011 258 313
- US-A1- 2012 011 247
- US-A1- 2013 064 138
- INTEL CORPORATION: "Discussion on RAN2 Aspects of D2D Discovery", 3GPP DRAFT; R2-132823_D2D_DISCOVERY_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 10 August 2013 (2013-08-10), XP050718544, Retrieved from the Internet: URL:http://www.3gpp.org/ftp/tsg_ran/WG2_RL 2/TSGR2_83/Docs/ [retrieved on 2013-08-10]
- CATT: "Views on D2D discovery design", 3GPP DRAFT; R1-133032, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716261, Retrieved from the Internet: URL:http://www.3gpp.org/ftp/tsg_ran/WG1_RL 1/TSGR1_74/Docs/ [retrieved on 2013-08-10]
- QUALCOMM INCORPORATED: "Techniques for D2D Discovery", 3GPP DRAFT; R1-132503 TECHNIQUES FOR D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698221, Retrieved from the Internet: URL:http://www.3gpp.org/ftp/tsg_ran/WG1_RL 1/TSGR1_73/Docs/ [retrieved on 2013-05-11]
- "3rd Generation Partnership Project; Technical Specification Group Services and System Aspects; Study on architecture enhancements to support Proximity Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 27 July 2013 (2013-07-27), pages 1-175, XP050712257, [retrieved on 2013-07-27]

## Description

### TECHNICAL FIELD

The disclosure relates to the field of communications, and in particular to a method, an apparatus and a system for discovering a Device to Device (D2D) device.

### BACKGROUND

D2D communication refers to the direct communication between proximity devices, for example, Bluetooth. The D2D communication generally adopts an unlicensed spectrum, such as, 2.4GHz. The D2D communication includes two aspects: discovery and communication. Discovery is to identify in a proximity area the User Equipment (UE) having D2D capability and applying a D2D application, and communication refers that D2D devices transmit user plane data through direction connections between users or through an Evolved Node B (eNB). The usage scene of D2D technology includes network coverage (for example, commercial application) and no network coverage of (for example, public safety communication). As for the scene of network coverage, the process is generally implemented by a control plane managing D2D at the network side. As for the scene of no network coverage, the control plane process is generally implemented by the D2D device itself. However, present technologies cannot provide a method for discovery between D2D devices.

"Discussion on RAN2 Aspects of D2D Discovery",R2-1 32823-D2D-DISCOVERY-V3, discloses the current SA2 and RAN1 work, understanding on the scope of RAN2, and view on RAN2 aspects on D2D discovery design and provides several proposals on D2D discovery and identified topics to be discussed in RAN2.

Section 6.1.8.2.3 of "Study on architecture enhancements to support Proximity Services (ProSe)", TR 23.703, discloses signalling flow for ProSe registration.

US 2013/0064138 A1 discloses a mechanism for registering and attachinga UE to a D2D discovery function. After identifying an ID information of at least one PLMN assigned for a D2D discovery and communication, a request for registering and attaching the UE to the D2D discovery function at the identifiedPLNM is sent to the network. The network sends a grant for the D2D discovery together with an indication corresponding to an identity of the at least one PLMN used for communicating resources dedicated to the D2D discovery and communication.

US 2012/011247 A1 discloses techniques for performing peer discovery in a wireless network. A device may perform peer discovery to detect and identify other devices of interest. In an aspect, the device may perform peer discovery based on a hybrid mode that includes autonomous peer discovery and network-as-sisted peer discovery. In another aspect, the device may perform peer discovery based on a push mode and a pull mode. For the push mode, the device may occasionally transmit and/or receive a peer detection signal. For the pull mode, the device may transmit and/or receive a peer discovery request when triggered. In yet another aspect, the device may perform event-triggered peer discovery (e.g., for the pull mode). In yet another aspect, the device may perform peer discovery using both a downlink spectrum and an uplink spectrum. In yet another aspect, the device may transmit a peer detection signal in a manner to improve detection and/or increase payload.

"Views on D2D discovery design", R1-133032, discloses three typical UE-UE, discovery types based on differelt physical layer discovery procedures, and the detection complexity of discovery signal, and further discloses three proposals, Direct discovery, eNB-assistant direct discovery, and request-based discovery shall be studied as basic discovery tl,pes. Direct discovery, eNB-assistant direct discovery, and request-based discovery shall be studied as basic discovery types.; Unified design of discovery signal is preferred for different discovery types.; The detection conplexity of discovery signal shall be taken into account in discovery design.

### SUMMARY

The invention is defined in the appended set of claims. In view of this, the disclosure is intended to provide a method, an apparatus and a system for discovering a D2D device, which can realize discovery between D2D devices, reduce the power consumption of D2D device and improve the discovery efficiency of D2D device.

The embodiment of the disclosure provides a method for discovering a D2D device, including:
a source D2D device determines whether there is network coverage; when there is network coverage, the source D2D device sends to a D2D gateway a request to discover one or more proximity D2D devices, herein, the request includes at least one of the following: a source D2D device identifier, a target D2D device identifier, an application server identifier, a group identifier, a network coverage indication, a discovery scope, a discovery time window; the source D2D device identifier is used in indicating the source D2D device that sends the request, the target D2D device identifier is used in indicating the target D2D device expected to be discovered; and
receives wireless resource information sent by an Evolved Node B, sends announcement information according to the wireless resource information and monitors response information; and
when there is no network coverage, the source D2D device sends announcement information according to wireless resource information preconfigured in the source D2D device and monitors response information;

In the scheme above, determining whether there is network coverage includes:
the source D2D device determines whether there is network coverage according to the signalling interaction with a network side and the network side context information saved in the source D2D device; if the source D2D device has a normal signalling interaction with the network side and the source D2D device has saved the network side context information, the source D2D device determines that there is network coverage; otherwise, the source D2D device determines that there is no network coverage;
In the scheme above, the wireless resource information includes at least one of the following: a frequency, a frame/sub-frame, a repetition interval, a resource index.

In the scheme above, the announcement information includes at least one of the following: the source D2D device identifier, the target D2D device identifier, the group identifier, the network coverage indication, whether to support relay, the discovery scope, the discovery time window.

In the scheme above, the response information is: receipt acknowledgement information sent to the source D2D device by a target D2D device, after the target D2D device receives the announcement information sent from the source D2D device; the receipt acknowledgement information is sent by the target D2D device on an allocated or a preconfigured wireless resource.

In the scheme above, the wireless resource information, the announcement information and the response information are sent through wireless resource control signalling.

The embodiment of the disclosure further provides a method for discovering a D2D device, including:
receiving, by a D2D gateway, a request sent by a source D2D device to discover one or more proximity D2D devices, herein the request comprises at least one of the following: a source D2D device identifier, a target D2D device identifier, an application server identifier, a group identifier, a network coverage indication, a discovery scope, a discovery time window; the source D2D device identifier is used in indicating the source D2D device that sends the request, the target D2D device identifier is used in indicating the target D2D device expected to be discovered;
determining, by the D2D gateway, whether the source D2D device indicated by the source D2D device identifier in the request and the target D2D device indicated by the target D2D device identifier in the request allow to discover or be discovered according to subscription data or locally stored data;
when the D2D gateway determines that the source D2D device indicated by the source D2D device identifier in the request and the target D2D device indicated by the target D2D device identifier in the request allow to discover or be discovered according to subscription data or locally stored data, the D2D gateway sends indication information to an Evolved Node B (eNB) through a Mobile Management Entity (MME), the indication information is used in indicating the request to discover one or more proximity D2D devices;
the eNB allocates a wireless resource for the D2D device according to the indication information and sends the wireless resource information.

In the scheme above, when the D2D gateway determines that the source D2D device indicated by the source D2D device identifier in the request and the target D2D device indicated by the target D2D device identifier in the request do not allow to discover or be discovered according to subscription data or locally stored data, the D2D gateway sends rejection indication information and rejection reason to the source D2D device.

In the scheme above, the indication information includes at least one of the following: the source D2D device identifier, the target D2D device identifier, the group identifier, the network coverage indication, the discovery scope, the discovery time window.

The embodiment of the disclosure also provides a D2D device, including: an application unit and a D2D unit, wherein
the application unit is configured to: determine whether there is network coverage, if so, send a request to discover one or more proximity D2D devices to the D2D unit, herein the request comprises at least one of the following: a source D2D device identifier, a target D2D device identifier, an application server identifier, a group identifier, a network coverage indication, a discovery scope, a discovery time window; the source D2D device identifier being used in indicating the source D2D device that sends the request, the target D2D device identifier being used in indicating the target D2D device expected to be discovered; and
receive wireless resource information sent by an Evolved Node B, eNB, and send announcement information through the D2D unit according to the wireless resource information and monitor response information; if not, send announcement information through the D2D unit according to preconfigured wireless resource information and monitor response information;
the D2D unit is configured to: send, to a D2D gateway, the request sent from the application unit, send the received wireless resource information to the application unit, and send out the announcement information sent from the application unit and monitor response information;
In the scheme above, the application unit specifically is configured to: determine whether there is network coverage according to the signalling interaction with a network side and the saved network side context information, and, if there is a normal signalling interaction with the network side and the network side context information already exists, determine that there is network coverage; otherwise, determine that there is no network coverage.

In the scheme above, the wireless resource information includes at least one of the following: a frequency, a frame/sub-frame, a repetition interval, a resource index.

In the scheme above, the announcement information includes: the source D2D device identifier, the target D2D device identifier, the group identifier, the network coverage indication, whether to support relay, the discovery scope, the discovery time window.

In the scheme above, the response information is: receipt acknowledgement information sent to the source D2D device by a target D2D device, after the target D2D device receives the announcement information sent from the source D2D device; the response information is sent by the target D2D device on an allocated or preconfigured wireless resource.

In the scheme above, the wireless resource information, the announcement information and the response information are sent through wireless resource control signalling.

In the method, apparatus and system provided by the disclosure for D2D device discovery, a source D2D device determines whether there is network coverage; if so, the source D2D device sends a request to discover one or more proximity D2D devices, receives wireless resource information, sends announcement information according to the wireless resource information and monitors response information; and if not, the source D2D device sends announcement information according to the wireless resource information preconfigured in the source D2D device and monitors response information. In this way, the discovery of D2D device can be realized only if an announcement message is sent according to the specified wireless resource, which can avoid the circular sending of announcement information and the continuous monitoring of response information, thereby reducing the power consumption of D2D device; in addition, the disclosure can avoid the aimless circular sending of announcement notice and the continuous monitoring of response, thereby improving the discovery efficiency between D2D devices.

### BRIEF DESCRIPTION OF THE DRAWINGS

Fig. 1 is a flowchart of a method according to embodiment 1 of the disclosure;
Fig. 2 is a flowchart of a method according to embodiment 2 of the disclosure;
Fig. 3 is a flowchart of a method according to embodiment 3 of the disclosure;
Fig. 4 is a flowchart of a method according to embodiment 4 of the disclosure;
Fig. 5 is a flowchart of a method according to embodiment 5 of the disclosure;
Fig. 6 is a structure diagram of a D2D device according to embodiment 6 of the disclosure; and
Fig. 7 is a structure diagram of a system according to embodiment 7 of the disclosure.

### DETAILED DESCRIPTION

A source D2D device determines whether there is network coverage; if so, the source D2D device sends a request to discover one or more proximity D2D devices, receives wireless resource information and sends announcement information according to the wireless resource information; if not, the source D2D device sends announcement information according to preconfigured wireless resource information.

The disclosure is described below in further detail in conjunction with accompanying drawings and specific embodiments.

### Embodiment 1

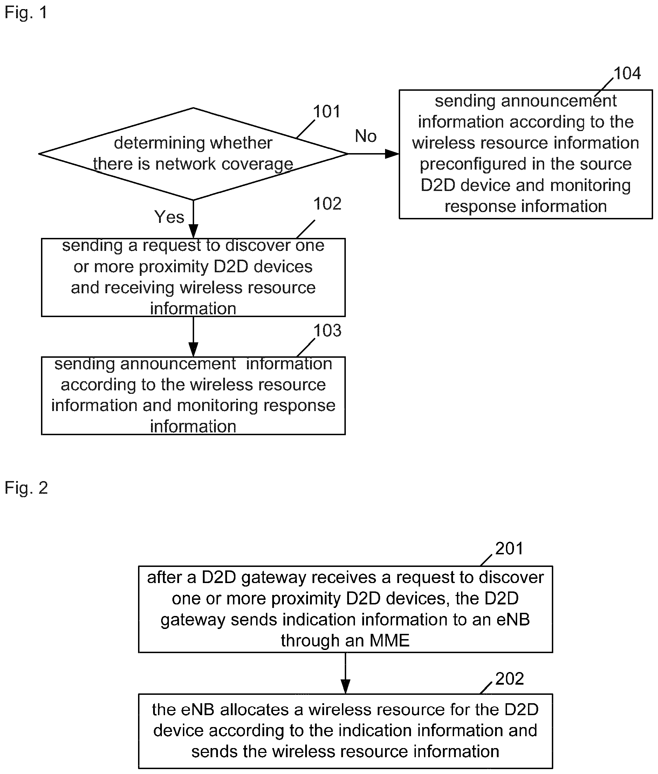

In the method for discovering a D2D device provided by the embodiment of the disclosure, the operation process at the D2D device side as shown in Fig. 1 includes:
S101: a source D2D device determines whether there is network coverage; if so, S102 is implemented; otherwise, S104 is implemented.

Here, determining whether there is network coverage includes: the source D2D device determines whether there is network coverage according to the signalling interaction with a network side and the context information in the source D2D device; if the source D2D device has a normal signalling interaction with the network side and the source D2D device has the network side context information, the source D2D device determines that there is network coverage; otherwise, the source D2D device determines that there is no network coverage.

The network coverage means that all D2D devices (including source and target D2D devices) involved in D2D discovery are located in the network coverage; if one or more of the source and target D2D devices are not in the network coverage, it is considered that there is no network coverage.

The source D2D device is a device which has the D2D discovery and communication capability and is subscribed to use the D2D function.

S102: the source D2D device sends a request to discover one or more proximity D2D devices and receives wireless resource information.

Here, the request to discover one or more proximity D2D devices includes at least one of the following: a source identifier, a target identifier, an application identifier, an application server identifier, a group identifier, a network coverage indication, a discovery scope, a discovery time window.

The source identifier is used to indicate the D2D device that sends the request; the target identifier is used to indicate the target device expected to be discovered; the discovery scope is used to indicate the area for discovering the target; the discovery time window is used to indicate the valid time for discovery.

The wireless resource information is realized through Radio Resource Control (RRC) signalling; and the wireless resource information includes at least one of the following: frequency, frame/sub-frame, repetition interval, resource index.

The resource index is used to indicate the wireless resource needed for different D2D discovery requirements, for example, point to point, point to multi-point, different distances between devices and other requirements; the wireless resource adopts an uplink wireless resource, that is, the air interface resource from UE to base station. The wireless resource is used for discovery between D2D devices.

The repetition interval is the time interval for the D2D device to send/monitor announcement information on the wireless resource.

S103: the source D2D device sends announcement information according to the wireless resource information and monitors response information. The process is ended.

Here, the announcement information includes at least one of the following: a source identifier (which is used to indicate the D2D device that sends the request), a target identifier (which is used to indicate the target device expected to be discovered), an application identifier, a group identifier, a network coverage indication, whether to support relay (which is used to indicate serving as relay), a discovery scope (which is used to indicate the area for discovering the target), a discovery time window (which is used to indicate the valid time for discovery) and the like. The D2D announcement information is sent through RRC signalling.

The response information is: acknowledgement information of receipt sent to the source D2D device by the proximity D2D device, after the proximity D2D device receives the announcement information sent from the source D2D device. The response information is sent by the target D2D device on an allocated or preconfigured wireless resource. The response information is sent through air interface RRC signalling.

S104: the source D2D device sends announcement information according to the wireless resource information preconfigured in the source D2D device and monitors response information.

The preconfigured wireless resource information includes at least one of the following: frequency, frame/sub-frame, repetition interval (which is used to indicate the time interval for the D2D device to send/monitor announcement information on the wireless resource), and resource index. The preconfigured wireless resource is a D2D dedicated wireless resource, which generally adopts the uplink wireless resource.

### Embodiment 2

In the method for D2D device discovery provided by the embodiment of the disclosure, the operation process at the network side as shown in Fig. 2 includes:
S201: after a D2D gateway receives a request to discover one or more proximity D2D devices, the D2D gateway sends indication information to an eNB through an MME.

Specifically, the D2D gateway determines whether the source D2D device and target D2D device in the request to discover one or more proximity D2D devices allow to discover or be discovered according to subscription data or locally stored data; if not, the D2D gateway sends rejection indication information and rejection reason to the source D2D device; otherwise, the D2D gateway sends indication information to the MME on which the source D2D device and target device are located.

The source D2D device and target D2D device might be located on the same or different MMEs.

The D2D gateway determines the information of the MME on which the D2D device is located according to D2D device identifier and D2D device registration information.

The MME sends indication information to the eNB on which the source D2D device and target D2D device are located; the source and target D2D devices might be located on the same or different eNBs. The MME determines the eNB on which the D2D device is located according to the D2D device registration information.

The indication information includes at least one of the following: a source identifier (which is used to indicate the D2D device that sends the request), a target identifier (which is used to indicate the target device expected to be discovered), an application identifier, a group identifier, a network coverage indication, a discovery scope (which is used to indicate the area for discovering the target), a discovery time window (which is used to indicate the valid time for discovery) and the like. The discovery time window can be realized by a timer.

S202: the eNB allocates a wireless resource for the D2D device according to the indication information and sends the wireless resource information.

### Embodiment 3

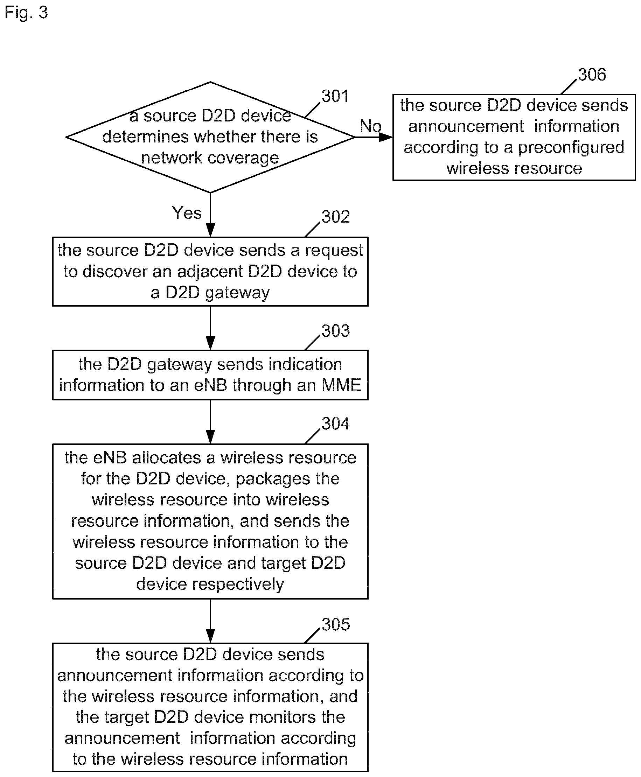

The method for D2D device discovery provided by the embodiment of the disclosure as shown in Fig. 3 includes:
S301: a source D2D device determines whether there is network coverage; if so, S302 is implemented.; otherwise, S306 is implemented..

Here, determining whether there is network coverage includes: the source D2D device determines whether there is network coverage according to the signalling interaction with a network side; if the source D2D device has a normal signalling interaction with the network side, the source D2D device determines that there is network coverage; otherwise, the source D2D device determines that there is no network coverage. The network coverage means that all D2D devices (including source and target D2D devices) involved in D2D discovery are located in the network coverage.

The source D2D device is a device which has the D2D discovery and communication capability and is subscribed to use the D2D function.

S302: the source D2D device sends a request to discover one or more proximity D2D devices to a D2D gateway.

Here, the D2D gateway is a network control plane node deployed to implement the D2D function, which might be a single physical node or a logical node attached to other physical nodes; the D2D gateway can be named as needed, for example, D2D control function, D2D server and so on.

The D2D device sends the discovery request message to the D2D gateway through control plane signalling; here, the control plane signalling is dedicated for D2D discovery.

The proximity D2D device is a D2D device in a proximity area, wherein the proximity area is an area meeting a preconfigured rule, that is, a D2D device can be discovered in this area. There might be one or multiple proximity D2D devices, wherein multiple proximity D2D devices generally belong to a common group, while one proximity D2D device generally is: a device which runs the same application (such as, social application, game, entertainment, shopping and other applications) as the D2D device initiating the request, or a device of which the user is a friend of the user of the D2D device initiating the request.

Here, the request to discover one or more proximity D2D devices includes at least one of the following: a source identifier, a target identifier, an application identifier, an application server identifier, a group identifier, a network coverage indication, a discovery scope, a discovery time window.

The source identifier is used to indicate the D2D device that sends the request; the target identifier is used to indicate the target device expected to be discovered; the discovery scope is used to indicate the area for discovering the target; the discovery time window is used to indicate the valid time for discovery.

The wireless resource information is realized through RRC signalling; and the wireless resource information includes at least one of the following: frequency, frame/sub-frame, repetition interval, resource index.

The repetition interval is the time interval for indicating the D2D device to send/monitor announcement information on the wireless resource.

S303: the D2D gateway sends indication information to an eNB through an MME.

Specifically, the D2D gateway determines whether the source D2D device and target D2D device have a discovery function and whether they allow to discover or be discovered according to subscription data or locally stored data; if not, the D2D gateway sends rejection indication information to the source D2D device, specifying rejection reason; otherwise, the D2D gateway sends indication information to the MME on which the source D2D device and target device are located.

The source D2D device and target D2D device might be located on the same or different MMEs.

The D2D gateway determines the information of the MME on which the D2D device is located according to D2D device identifier and D2D device registration information.

The MME sends indication information to the eNB on which the source D2D device and target D2D device are located; the source and target D2D devices might be located on the same or different eNBs. The MME determines the eNB on which the D2D device is located according to the D2D device registration information.

The indication information includes at least one of the following: a source identifier (which is used to indicate the D2D device that sends the request), a target identifier (which is used to indicate the target device expected to be discovered), an application identifier, a group identifier, a network coverage indication, a discovery scope (which is used to indicate the area for discovering the target), a discovery time window (which is used to indicate the valid time for discovery) and the like. The discovery time window can be realized by a timer.

S304: the eNB allocates a wireless resource for the D2D device, packages the wireless resource into wireless resource information, and sends the wireless resource information to the source D2D device and target D2D device respectively.

The eNB might be an eNB on which the source D2D device and target D2D device are located; there might be one or more eNBs (if there are multiple target D2D devices).

The wireless resource adopts the uplink resource (UE to eNB), which might be dedicated or common.

S305: the source D2D device sends announcement information according to the wireless resource information, and the target D2D device monitors the announcement information according to the wireless resource information. The process is ended.

The source D2D device sends announcement information through the wireless resource, and the target D2D device monitors the announcement information through the wireless resource.

The D2D announcement information is used to indicate D2D discovery, including at least one of the following: a source identifier (which is used to indicate the D2D device that sends the request), a target identifier (which is used to indicate the target device expected to be discovered), an application identifier, a group identifier, a network coverage indication, whether to support relay (which is used to indicate serving as relay), a discovery scope (which is used to indicate the area for discovering the target), a discovery time window (which is used to indicate the valid time for discovery) and the like. The D2D announcement information is sent through RRC signalling.

The target D2D device monitors the announcement information on the wireless resource; if the target D2D device has monitored the D2D announcement information, the target D2D device sends a response message to the source D2D device through the wireless resource, wherein the response message is used to indicate that the target D2D device receives the announcement information, and the response message is sent through RRC signalling.

When the source D2D device receives the response message from the target D2D device, the source D2D device further establishes a wireless connection with the target D2D device to perform D2D communication.

S306: the source D2D device sends announcement information according to a preconfigured wireless resource.

The D2D device being not in the network coverage including two conditions: 1) both source and target D2D devices are not in the network coverage; 2) one party of source and target D2D devices is in the network coverage; the source and target D2D devices send and monitor D2D announcement information according to the preconfigured wireless resource.

The preconfiguredting means that the wireless resource is stored in the D2D device before D2D discovery; and preconfiguredting can be realized through the allocation by a network side when the D2D device is located in the network coverage or through the pre-configuration in the D2D device by a D2D device manufacturer.

The preconfigured wireless resource information includes at least one of the following: frequency, frame/sub-frame, repetition interval (which is used to indicate the time interval for the D2D device to send/monitor announcement information on the wireless resource.), and resource index (which is used to indicate the wireless resource needed for different D2D discovery requirements, for example, point to point, point to multi-point, different distances between devices and other requirements).

The target D2D device monitors the announcement information on the wireless resource; if the target D2D device has monitored the D2D announcement information, the target D2D device sends a response message to the source D2D device through the wireless resource, wherein the response message is used to indicate that the target D2D device receives the announcement information, and the response message is sent through RRC signalling.

When the source D2D device receives the response message from the target D2D device, the source D2D device further establishes a wireless connection with the target D2D device to perform D2D communication.

### Embodiment 4

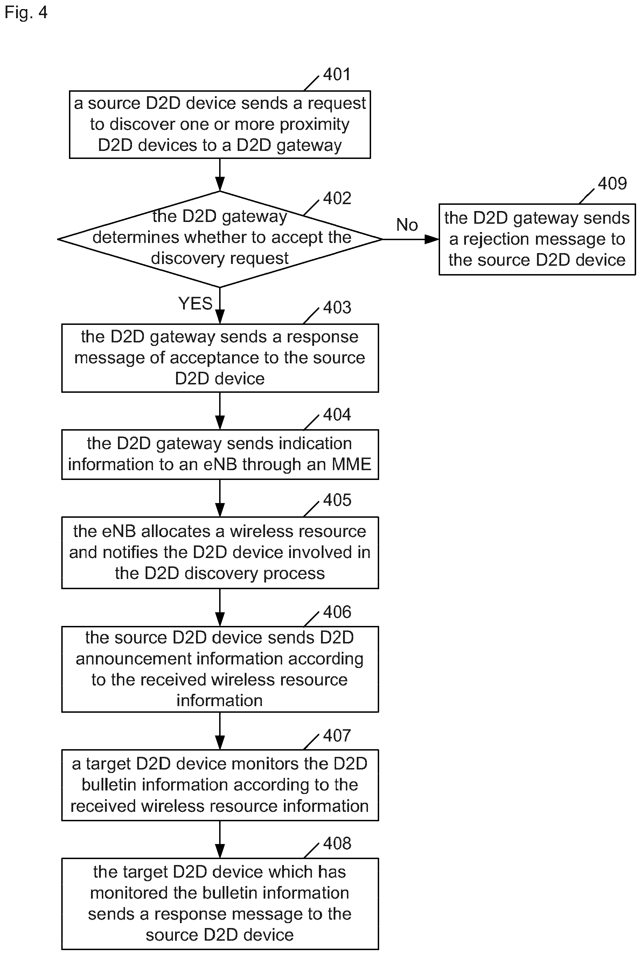

For the scene that a D2D device discovers a proximity D2D device in the condition of network coverage, the method for D2D device discovery as shown in Fig. 4 includes:
S401: a source D2D device sends a request to discover one or more proximity D2D devices to a D2D gateway.

There is a direct interface between the source D2D device and the D2D gateway. The D2D gateway belongs to a control plane node, which exists in both visited network and home network; if the source D2D device is in a roaming scene, it sends a request message through the D2D gateway in the visited network; otherwise, it sends a request message through the D2D gateway in the home network.

The request to discover one or more proximity D2D devices is control planning signalling, and the request message includes at least one of the following: a source identifier, a target identifier, an application identifier, an application server identifier (which is used to indicate the information of the server on which the application is located), a group identifier, a network coverage indication, a discovery scope (which is used to indicate the area for discovering the target), discovery time window (which is used to indicate the valid time for discovery) and the like. If the target is a specified D2D device, the target identifier is applied; if the target is a group of D2D devices, the group identifier is applied; if the target is a D2D device running a specified application, the application identifier is applied.

S402: the D2D gateway determines whether to accept the discovery request; if so, S403 is implemented; otherwise, S409 is implemented.

Here, the D2D gateway determines whether to accept the request according to the following conditions: whether the D2D device involved in the discovery has a D2D discovery function, whether the D2D device involved in the discovery allow D2D discovery/being discovered, whether the source D2D device and target device belong to the same group when the target D2D device is a group of D2D devices; if the above conditions are positive, the D2D gateway accepts the discovery request; otherwise, the D2D gateway rejects the discovery request.

S403: the D2D gateway sends a response message of acceptance to the source D2D device.

The D2D gateway sends a response message of acceptance to the source D2D device through control plane signalling; the response message is sent within the time window specified by the discovery request.

S404: the D2D gateway sends indication information to an eNB through an MME.

The D2D gateway queries the MME and eNB on which the source/target D2D device is located according to the registration information of the D2D device; there might be one or more MMEs and eNBs.

The indication information is used to indicate the discovery request and is sent through control plane signalling.

S405: the eNB allocates a wireless resource and notifies the D2D device involved in the D2D discovery process.

The allocation can be dynamic allocation, static allocation or semi-static allocation, in which, the dynamic allocation is to allocate a different resource each time according to the type of the discovery request and the condition of network resources, the static allocation is to allocate a fixed resource each time, the semi-static allocation is to select a needed resource in a certain resource scope. The wireless resource adopts the uplink resource from UE to eNB.

The notification is sent through RRC signalling.

S406: the source D2D device sends D2D announcement information according to the received wireless resource information.

The D2D announcement information, sent through RRC signalling, is sent periodically, so as to improve the reliability of the target D2D device receiving the announcement information. The D2D announcement period is determined when the eNB allocates the wireless resource.

S407: a target D2D device monitors the D2D announcement information according to the received wireless resource information.

The target D2D device monitors the D2D announcement information on the allocated wireless resource according to the announcement period.

S408: the target D2D device which has monitored the announcement information sends a response message to the source D2D device. The process is ended.

Specifically, if the target D2D device has monitored the D2D announcement information, it sends a response message through the allocated wireless resource; if the target D2D device is a group of devices, part or all of the target D2D devices can send a response message.

The response message is RRC signalling, which is sent within the discovery time window.

S409: the D2D gateway sends a rejection message to the source D2D device.

When the D2D gateway determines that the D2D discovery request is not supported, the D2D gateway sends a rejection message to the source D2D device, and meanwhile specifies the rejection reason, for example, the target D2D device does not allow to be discovered, or the source D2D device and target D2D device do not belong to the same group, and so on.

The rejection message is sent through control signalling; if no response message of acceptance or rejection is received within the discovery time window, the source D2D device considers that the discovery request is failed.

### Embodiment 5

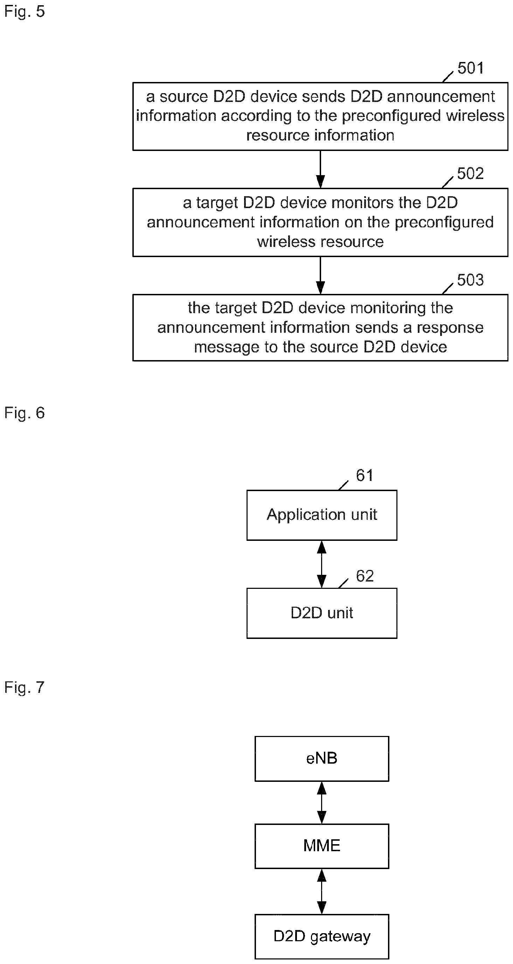

For the scene that a D2D device discovers a proximity D2D device in the condition of no network coverage, the method for D2D device discovery as shown in Fig. 5 includes:
S501: a source D2D device sends D2D announcement information according to the preconfigured wireless resource information.

The present wireless resource information refers to the resource configuration information stored in the D2D device before the discovery.

The preconfiguredting can be configured by a network side eNB when the D2D device is located in the network coverage or can be configured in advance by a D2D device manufacturer.

The preconfigured wireless resource information includes at least one of the following: frequency, frame/sub-frame, repetition interval (which is used to indicate the time interval for the D2D device to send/monitor announcement information on the wireless resource.), and resource index (which is used to indicate the wireless resource needed for different D2D discovery requirements, for example, point to point, point to multi-point, different distances between devices and other requirements).

S502: a target D2D device monitors the D2D announcement information on the preconfigured wireless resource.

The target D2D device monitors the D2D announcement information on the wireless resource according to the preconfigured period.

S503: the target D2D device which has monitored the announcement information sends a response message to the source D2D device.

The response message is sent through an RRC message, which is sent within the discovery time window. If no response message of acceptance or rejection is received within the discovery time window, the source D2D device considers that the discovery request is failed.

### Embodiment 6

In order to implement the above method, the embodiment of the disclosure provides a D2D device, which as shown in Fig. 6 includes: an application unit 61 and a D2D unit 62, wherein
the application unit 61 is configured to: determine whether there is network coverage, if so, send a request to discover one or more proximity D2D devices to the D2D unit 62, send announcement information through the D2D unit 62 according to the wireless resource information and monitor response information; if not, send announcement information through the D2D unit 62 according to the preconfigured wireless resource information and monitor response information;
the D2D unit 62 is configured to: send the request to discover one or more proximity D2D devices sent from the application unit 61, send the received wireless resource information to the application unit 61, and send out the announcement information sent from the application unit 61.

The application unit 61 specifically is configured to: determine whether there is network coverage according to the signalling interaction with a network side and the saved network side context information, and, if there is a normal signalling interaction with the network side and the network side context information already exists, determine that there is network coverage; otherwise, determine that there is no network coverage.

The request to discover one or more proximity D2D devices includes at least one of the following: a source identifier, a target identifier, an application identifier, an application server identifier, a group identifier, a network coverage indication, a discovery scope, a discovery time window and the like. The source identifier is used to indicate the D2D device that sends the request; the target identifier is used to indicate the target device expected to be discovered; the discovery scope is used to indicate the area for discovering the target; the discovery time window is used to indicate the valid time for discovery.

The wireless resource information is realized through RRC signalling; and the wireless resource information includes at least one of the following: frequency, frame/sub-frame, repetition interval, resource index.

The repetition interval is the time interval for the D2D device to send/monitor announcement information on the wireless resource.

Here, the announcement information includes at least one of the following: a source identifier (which is used to indicate the D2D device that sends the request), a target identifier (which is used to indicate the target device expected to be discovered), an application identifier, a group identifier, a network coverage indication, whether to support relay (which is used to indicate serving as relay), a discovery scope (which is used to indicate the area for discovering the target), a discovery time window (which is used to indicate the valid time for discovery) and the like. The D2D announcement information is sent through RRC signalling.

The preconfigured wireless resource information includes at least one of the following: frequency, frame/sub-frame, repetition interval (which is used to indicate the time interval for the D2D device to send/monitor announcement information on the wireless resource.), and resource index (which is used to indicate the wireless resource needed for different D2D discovery requirements, for example, point to point, point to multi-point, different distances between devices and other requirements).

The response information is: acknowledgement information of receipt sent to the source D2D device by the target D2D device, after the target D2D device receives the announcement information sent from the source D2D device. The response information is sent by the target D2D device on an allocated or preconfigured wireless resource.

The wireless resource information, the announcement information and the response information are sent through wireless resource control signalling.

The above application unit 61 and D2D unit 62 both can be realized through Central Processing Unit (CPU), Digital Signal Processor (DSP) and other hardware.

### Embodiment 7

The embodiment of the disclosure also provides a network side sub-system, which as shown in Fig. 7 includes: an eNB, an MME and a D2D gateway, wherein
the D2D gateway is configured to send indication information to the MME after receiving a request to discover one or more proximity D2D devices;
the MME is configured to send the indication information sent from the D2D gateway to the eNB; and
the eNB is configured to allocate a wireless resource for the D2D device according to the indication information and to send the wireless resource information.

The D2D gateway specifically is configured to: determine whether the source D2D device and target D2D device in the request to discover one or more proximity D2D devices allow to discover or be discovered according to subscription data or locally stored data, if not, send rejection indication information and rejection reason to the source D2D device; otherwise, send indication information to the MME on which the source D2D device and target device are located.

The source D2D device and target D2D device might be located on the same or different MMEs.

The D2D gateway determines the information of the MME on which the D2D device is located according to D2D device identifier and D2D device registration information.

The MME sends indication information to the eNB on which the source D2D device and target D2D device are located; the source and target D2D devices might be located on the same or different eNBs. The MME determines the eNB on which the D2D device is located according to the D2D device registration information.

The indication information includes at least one of the following: a source identifier (which is used to indicate the D2D device that sends the request), a target identifier (which is used to indicate the target device expected to be discovered), an application identifier, a group identifier, a network coverage indication, a discovery scope (which is used to indicate the area for discovering the target), a discovery time window (which is used to indicate the valid time for discovery) and the like. The discovery time window can be realized by a timer.

### Embodiment 8

The system for D2D device discovery provided by the embodiment includes: a source D2D device and a network side sub-system, wherein
the source D2D device is configured to: determine whether there is network coverage, if so, send a request to discover one or more proximity D2D devices to the network side sub-system and receive wireless resource information, send announcement information according to the wireless resource information and monitor response information; if not, send announcement information according to the wireless resource information preconfigured in the source D2D device and monitor response information;
the network side sub-system is configured to allocate, after receiving the request to discover one or more proximity D2D devices from the source D2D device, a wireless resource for the D2D device according to the indication information and to send the wireless resource information to the source D2D device.

The network side sub-system includes: an eNB, an MME and a D2D gateway, wherein
the D2D gateway is configured to send indication information to the MME after receiving a request to discover one or more proximity D2D devices;
the MME is configured to send the indication information sent from the D2D gateway to the eNB; and
the eNB is configured to allocate a wireless resource for the D2D device according to the indication information and to send the wireless resource information.

The above are the preferred embodiments of the disclosure only, and are not intended to limit the scope of protection of the disclosure.

## Claims

1. A method for discovering a Device to Device, D2D, device, **characterized in that**, the method comprises:
determining, by a source D2D device, whether there is network coverage (101);
when there is the network coverage, sending, by the source D2D device, to a D2D gateway a request to discover one or more proximity D2D devices, wherein the request comprises a source D2D device identifier and a target D2D device identifier, the source D2D device identifier being used in indicating the source D2D device that sends the request, the target D2D device identifier being used in indicating a target D2D device expected to be discovered;
receiving, by the source D2D device, wireless resource information sent by an Evolved Node B, eNB (102), sending, by the source D2D device, announcement information according to the wireless resource information and monitoring response information (103);
receiving, by the source D2D device, rejection indication information and rejection reason sent by D2D gateway; and
when there is no network coverage, sending, by the source D2D device, announcement information according to wireless resource information preconfigured in the source D2D device and monitoring response information (104).

2. The method according to claim 1, wherein determining whether there is network coverage (101) comprises:
determining, by the source D2D device, whether there is network coverage according to a signalling interaction with a network side and the network side context information saved in the source D2D device; if the source D2D device has a normal signalling interaction with the network side and the source D2D device has saved the network side context information, determining that there is network coverage; otherwise, determining that there is no network coverage.

3. The method according to claim 1, wherein the request further comprises at least one of the following: an application server identifier, a group identifier, a network coverage indication, a discovery scope, a discovery time window.

4. The method according to claim 1, wherein the wireless resource information comprises at least one of the following: a frequency, a frame/subframe, a repetition interval, a resource index.

5. The method according to claim 3, wherein the announcement information comprises at least one of the following: the source D2D device identifier, the target D2D device identifier, the group identifier, the network coverage indication, whether to support relay, the discovery scope, the discovery time window.

6. The method according to claim 1, wherein the response information is: receipt acknowledgement information sent to the source D2D device by a target D2D device, after the target D2D device receives the announcement information sent from the source D2D device; the receipt acknowledgement information is sent by the target D2D device on an allocated or a preconfigured wireless resource.

7. The method according to claim 1, wherein the wireless resource information, the announcement information and the response information are sent through wireless resource control signalling.

8. A method for discovering a Device to Device, D2D, device, **characterized in that**, the method comprises:
receiving, by a D2D gateway, a request sent by a source D2D device to discover one or more proximity D2D devices, wherein the request comprises a source D2D device identifier and a target D2D device identifier, the source D2D device identifier being used in indicating the source D2D device that sends the request, the target D2D device identifier being used in indicating a target D2D device expected to be discovered;
determining, by the D2D gateway, whether the source D2D device indicated by the source D2D device identifier in the request and the target D2D device indicated by the target D2D device identifier in the request allow to discover or be discovered according to subscription data or locally stored data;
when the D2D gateway determines that the source D2D device indicated by the source D2D device identifier in the request and the target D2D device indicated by the target D2D device identifier in the request allow to discover or be discovered according to subscription data or locally stored data, sending, by the D2D gateway, indication information to an Evolved Node B, eNB, through a Mobile Management Entity, MME, (201), the indication information being used in indicating the request to discover one or more proximity D2D devices;
when the D2D gateway determines that the source D2D device indicated by the source D2D device identifier in the request and the target D2D device indicated by the target D2D device identifier in the request do not allow to discover or be discovered according to subscription data or locally stored data, sending, by the D2D gateway, rejection indication information and rejection reason to the source D2D device;
allocating (304), by the eNB, a wireless resource for the D2D device according to the indication information, packages the wireless resource into wireless resource information and sending the wireless resource information (202) to the source D2D device and target D2D device respectively.

9. The method according to claim 8, the request further comprises at least one of the following: an application server identifier, a group identifier, a network coverage indication, a discovery scope, a discovery time window.

10. The method according to claim 8 wherein the indication information further comprises at least one of the following: a group identifier, a network coverage indication, a discovery scope, a discovery time window.

11. A Device to Device (D2D) device, **characterized in that**, the D2D device comprises: an application unit (61) and a D2D unit (62), wherein
the application unit (61) is configured to:
determine whether there is network coverage;
when there is the network coverage, send a request to discover one or more proximity D2D devices to the D2D unit (62), wherein the request comprises a source D2D device identifier and a target D2D device identifier the source D2D device identifier being used in indicating a source D2D device that sends the request, the target D2D device identifier being used in indicating a target D2D device expected to be discovered;
receive wireless resource information sent by an Evolved Node B, eNB, and send announcement information through the D2D unit (62) according to the wireless resource information and monitor response information;
receive rejection indication information and rejection reason sent by D2D gateway;
when there is no network coverage, send announcement information through the D2D unit (62) according to preconfigured wireless resource information and monitor response information;
the D2D unit (62) is configured to:
send, to a D2D gateway, the request sent from the application unit (61);
send the received wireless resource information to the application unit (61); and
send out the announcement information sent from the application unit (61) and monitor response information.

12. The D2D device according to claim 11, wherein
the application unit (61) is configured to: determine whether there is network coverage according to a signalling interaction with a network side and the saved network side context information, and, if there is a normal signalling interaction with the network side and the network side context information already exists, determine that there is network coverage; otherwise, determine that there is no network coverage.

13. The D2D device according to claim 11, wherein the request further comprises at least one of the following: an application server identifier, a group identifier, a network coverage indication, a discovery scope, a discovery time window,
wherein the announcement information further comprises at least one of the following: a group identifier, a network coverage indication, whether to support relay, a discovery scope, a discovery time window; and wherein the response information is: receipt acknowledgement information sent to the source D2D device by a target D2D device, after the target D2D device receives the announcement information sent from the source D2D device; the response information is sent by the target D2D device on an allocated or a preconfigured wireless resource.

14. The D2D device according to claim 11, wherein the wireless resource information comprises at least one of the following: a frequency, a frame/sub-frame, a repetition interval, a resource index.

15. The D2D device according to claim 11, wherein the wireless resource information, the announcement information and the response information are sent through wireless resource control signalling.

## Patentansprüche

1. Verfahren zum Ermitteln eines Device-to-Device, D2D-Gerätes, **dadurch gekennzeichnet, dass** das Verfahren umfasst:
Bestimmen, durch ein Quell-D2D-Gerät, ob es eine Netzabdeckung gibt (101);
wenn die Netzabdeckung vorhanden ist, Senden einer Anfrage durch das Quell-D2D-Gerät an ein D2D-Gateway, um eines oder mehrere Proximity-D2D-Geräte zu ermitteln, wobei die Anfrage einen Quell-D2D-Geräte-Identifikator und einen Ziel-D2D-Geräte-ldentifikator umfasst, wobei der Quell-D2D-Geräte-ldentifikator verwendet wird, um das Quell-D2D-Gerät anzuzeigen, das die Anfrage sendet, und der Ziel-D2D-Geräte-ldentifikator verwendet wird, um ein Ziel-D2D-Gerät anzuzeigen, von dem erwartet wird, dass es ermittelt wird;
Empfangen, durch das Quell-D2D-Gerät, von drahtlosen Ressourceninformationen, die von einem Evolved Node B, eNB (102), gesendet werden, Senden, durch das Quell-D2D-Gerät, von Ankündigungsinformationen gemäß den drahtlosen Ressourceninformationen und Überwachen von Antwortinformationen (103);
Empfangen, durch das Quell-D2D-Gerät, von Ablehnungs-Angabeinformationen und Ablehnungsgrund, die durch ein D2D-Gateway gesendet wurden; und
wenn es keine Netzabdeckung gibt, Senden von Ankündigungsinformationen durch das Quell-D2D-Gerät gemäß den in dem Quell-D2D-Gerät vorkonfigurierten Informationen über drahtlose Ressourcen und Überwachungsantwort-Informationen (104).

2. Verfahren nach Anspruch 1, wobei das Bestimmen, ob eine Netzabdeckung (101) vorliegt, umfasst:
Bestimmen, durch das Quell-D2D-Gerät, ob es eine Netzabdeckung gibt, gemäß einer Signalisierungsinteraktion mit einer Netzseite und den in dem Quell-D2D-Gerät gespeicherten netzseitigen Kontextinformationen; wenn das Quell-D2D-Gerät eine normale Signalisierungsinteraktion mit der Netzseite hat und das Quell-D2D-Gerät die netzseitigen Kontextinformationen gespeichert hat, Bestimmen, dass es eine Netzabdeckung gibt; andernfalls Bestimmen, dass es keine Netzabdeckung gibt.

3. Verfahren nach Anspruch 1, wobei die Anfrage ferner mindestens eines der folgenden umfasst: einen Anwendungsserver-Identifikator, einen Gruppen-Identifikator, eine Netzabdeckungsanzeige, einen Ermittlungsbereich, ein Ermittlungszeitfenster.

4. Verfahren nach Anspruch 1, wobei die drahtlose Ressourceninformation mindestens eines der folgenden umfasst: eine Frequenz, einen Rahmen/Subrahmen, ein Wiederholungsintervall, einen Ressourcenindex.

5. Verfahren nach Anspruch 3, wobei die Ankündigungsinformation mindestens eines der folgenden umfasst: den Quell-D2D-Geräte-Identifikator, den Ziel-D2D-Geräte-ldentifikator, den Gruppen-Identifikator, die Netzabdeckungsanzeige, ob ein Relais unterstützt werden soll, den Ermittlungsbereich, das Ermittlungszeitfenster.

6. Verfahren nach Anspruch 1, wobei die Antwortinformation ist: Empfangsbestätigungsinformation, die von einem Ziel-D2D-Gerät an das Quell-D2D-Gerät gesendet wird, nachdem das Ziel-D2D-Gerät die von dem Quell-D2D-Gerät gesendete Ankündigungsinformation empfängt; die Empfangsbestätigungsinformation wird von dem Ziel-D2D-Gerät auf einer zugewiesenen oder einer vorkonfigurierten drahtlosen Ressource gesendet.

7. Verfahren nach Anspruch 1, bei dem die drahtlose Ressourceninformation, die Ankündigungsinformation und die Antwortinformation durch drahtlose Ressourcensteuerungssignalisierung gesendet werden.

8. Verfahren zum Ermitteln eines Device to Device, D2D-Gerätes, **dadurch gekennzeichnet, dass** das Verfahren umfasst:
Empfangen, durch ein D2D-Gateway, einer von einem Quell-D2D-Gerät gesendeten Anfrage, eines oder mehrere Annäherungs-D2D-Geräte zu ermitteln, wobei die Anfrage einen Quell-D2D-Geräte-ldentifikator und einen Ziel-D2D-Geräte-ldentifikator umfasst, wobei der Quell-D2D-Geräte-Identifikator verwendet wird, um das Quell-D2D-Gerät anzuzeigen, das die Anfrage sendet, und der Ziel-D2D-Geräte-ldentifikator verwendet wird, um ein Ziel-D2D-Gerät anzuzeigen, von dem erwartet wird, dass es ermittelt wird;
Bestimmen durch das D2D-Gateway, ob das Quell-D2D-Gerät, das durch den Quell-D2D-Geräte-ldentifikator in der Anfrage angegeben wird, und das Ziel-D2D-Gerät, das durch den Ziel-D2D-Geräte-ldentifikator in der Anfrage angegeben wird, es erlauben, gemäß Abonnement-Daten oder lokal gespeicherten Daten zu ermitteln oder ermittelt zu werden;
wenn das D2D-Gateway feststellt, dass das Quell-D2D-Gerät, das durch die Quell-D2D-Gerätekennung in der Anfrage angegeben ist, und das Ziel-D2D-Gerät, das durch die Ziel-D2D-Gerätekennung in der Anfrage angegeben ist, es ermöglichen, anhand von Abonnement-Daten oder lokal gespeicherten Daten zu ermitteln oder ermittelt zu werden, sendet das D2D-Gateway über eine Mobile Management Entity, MME (201), Anzeigeinformationen an einen Evolved Node B, eNB, wobei die Anzeigeinformationen bei der Anzeige der Anfrage zur Ermittlung eines oder mehrerer D2D-Geräte in der Nähe verwendet werden;
wenn das D2D-Gateway feststellt, dass das Quell-D2D-Gerät, das durch den Quell-D2D-Geräte-ldentifikator in der Anfrage angegeben wird, und das Ziel-D2D-Gerät, das durch den Ziel-D2D-Geräte-ldentifikator in der Anfrage angegeben wird, es nicht erlauben, entsprechend den Abonnement-Daten oder lokal gespeicherten Daten zu ermitteln oder ermittelt zu werden, sendet das D2D-Gateway Anzeigeinformationen und einen Ablehnungsgrund an das Quell-D2D-Gerät;
Zuweisen (304), durch den eNB, einer drahtlosen Ressource für das D2D-Gerät gemäß den Anzeigeinformationen, Verpacken der drahtlosen Ressource in drahtlose Ressourceninformationen und Senden der drahtlosen Ressourceninformationen (202) an das Quell-D2D-Gerät bzw. Ziel-D2D-Gerät.

9. Verfahren nach Anspruch 8, die Anfrage umfasst ferner mindestens eines der folgenden: einen Anwendungsserver-Identifikator, einen Gruppen-Identifikator, eine Netzabdeckungsangabe, einen Ermittlungsbereich, ein Ermittlungszeitfenster.

10. Verfahren nach Anspruch 8
wobei die Indikationsinformation ferner mindestens eines der folgenden umfasst: eine Gruppenkennung, eine Netzabdeckungsindikation, einen Ermittlungsbereich, ein Ermittlungszeitfenster.

11. Device-to-Device, D2D-Gerät (D2D), **dadurch gekennzeichnet, dass** das D2D-Gerät umfasst: eine Anwendungseinheit (61) und eine D2D-Einheit (62), wobei die Anwendungseinheit (61) so konfiguriert ist, um
zu bestimmen, ob es eine Netzabdeckung gibt;
wenn die Netzabdeckung vorhanden ist, eine Anfrage zum Ermitteln eines oder mehrerer D2D-Geräte in der Nähe an die D2D-Einheit (62) zu senden, wobei die Anfrage einen Quell-D2D-Geräte-ldentifikator und einen Ziel-D2D-Geräte-ldentifikator umfasst, wobei der Quell-D2D-Geräte-Identifikator zum Anzeigen eines Quell-D2D-Gerätes verwendet wird, das die Anfrage sendet, und der Ziel-D2D-Geräteidentifikator zum Anzeigen eines Ziel-D2D-Gerätes verwendet wird, von dem erwartet wird, dass es ermittelt wird;
Empfangen von drahtlosen Ressourceninformationen, die von einem Evolved Node B, eNB, gesendet werden, und Senden von Ankündigungsinformationen durch die D2D-Einheit (62) entsprechend den drahtlosen Ressourceninformationen und Überwachen der Antwortinformationen;
Empfangen von einem D2D-Gateway gesendete Ablehnungs-Angabeinformationen und Ablehnungsgründe;
wenn keine Netzabdeckung vorhanden ist, Senden von Ankündigungsinformationen durch die D2D-Einheit (62) entsprechend den vorkonfigurierten Informationen über die drahtlosen Ressourcen und Überwachen der Antwortinformationen;
die D2D-Einheit (62) ist konfiguriert um:
die von der Anwendungseinheit (61) gesendete Anfrage an ein D2D-Gateway zu senden;
die empfangenen drahtlosen Ressourcen-Informationen an die Anwendungseinheit (61) zu senden; und die D2D-Einheit (62) so konfiguriert ist, die von der Anwendungseinheit (61) gesendeten Ankündigungsinformationen zu senden und die Antwortinformationen zu überwachen.

12. D2D-Gerät nach Anspruch 11, wobei
die Anwendungseinheit (61) so konfiguriert ist, dass sie: anhand einer Signalisierungsinteraktion mit einer Netzseite und den gespeicherten netzseitigen Kontextinformationen feststellt, ob eine Netzabdeckung besteht, und, falls eine normale Signalisierungsinteraktion mit der Netzseite besteht und die netzseitigen Kontextinformationen bereits vorhanden sind, feststellt, dass eine Netzabdeckung besteht; und dann feststellt, dass keine Netzabdeckung besteht.

13. D2D-Gerät nach Anspruch 11, wobei die Anfrage ferner mindestens eines der folgenden umfasst: einen Anwendungsserver-Identifikator, einen Gruppen-Identifikator, eine Netzabdeckungsanzeige, einen Ermittlungsbereich, ein Ermittlungszeitfenster,
wobei die Ankündigungsinformation ferner mindestens eines der folgenden umfasst:
eine Gruppenkennung, eine Netzabdeckungsanzeige, die Angabe, ob ein Relais unterstützt werden soll, einen Ermittlungsbereich, ein Ermittlungszeitfenster; und
wobei die Antwortinformation ist: Empfangsbestätigungsinformation, die von einem Ziel-D2D-Gerät an das Quell-D2D-Gerät gesendet wird, nachdem das Ziel-D2D-Gerät die von dem Quell-D2D-Gerät gesendete Ansageinformation empfängt; die Antwortinformation wird von dem Ziel-D2D-Gerät auf einer zugewiesenen oder einer vorkonfigurierten drahtlosen Ressource gesendet.

14. D2D-Gerät nach Anspruch 11, wobei die drahtlose Ressourceninformation mindestens eines der folgenden umfasst: eine Frequenz, einen Frame/Sub-Frame, ein Wiederholungsintervall, einen Ressourcenindex.

15. D2D-Gerät nach Anspruch 11, wobei die drahtlose Ressourceninformation, die Ankündigungsinformation und die Antwortinformation durch drahtlose Ressourcensteuerungssignalisierung gesendet werden.

## Revendications

1. Procédé pour découvrir un dispositif de dispositif à dispositif, D2D, **caractérisé en ce que**, le procédé comprend :
déterminer, par un dispositif D2D source, s'il existe une couverture de réseau (101) ;
lorsqu'il existe une couverture de réseau, la transmission, par le dispositif D2D source, à une passerelle D2D, d'une demande de découverte d'un ou plusieurs dispositifs D2D de proximité, dans lequel la demande comprend un identificateur de dispositif D2D source et un identificateur de dispositif D2D cible, l'identificateur de dispositif D2D source étant utilisé pour indiquer le dispositif D2D source qui envoie la demande, l'identificateur de dispositif D2D cible étant utilisé pour indiquer un dispositif D2D cible censé être découvert ;
recevoir, par le dispositif D2D source, des informations sur les ressources sans fil envoyées par un nœud B évolué, eNB (102), envoyer, par le dispositif D2D source, des informations d'annonce en fonction des informations sur les ressources sans fil et surveiller les informations de réponse (103) ;
recevoir, par le dispositif D2D source, des informations d'indication de rejet et la raison du rejet envoyées par la passerelle D2D ; et
lorsqu'il n'y a pas de couverture réseau, la transmission, par le dispositif D2D source, d'informations d'annonce selon des informations de ressources sans fil préconfigurées dans le dispositif D2D source et la surveillance des informations de réponse (104).

2. Procédé selon la revendication 1, qui consiste à déterminer s'il existe une couverture de réseau (101) :
déterminer, par le dispositif D2D source, s'il existe une couverture de réseau selon une interaction de signalisation avec un côté du réseau et les informations de contexte du côté du réseau sauvegardées dans le dispositif D2D source ; si le dispositif D2D source a une interaction de signalisation normale avec le côté du réseau et que le dispositif D2D source a sauvegardé les informations de contexte du côté du réseau, déterminer qu'il existe une couverture de réseau ; autrement, déterminer qu'il n'existe pas de couverture de réseau.

3. Procédé selon la revendication 1, dans lequel la demande comprend en outre au moins un des éléments suivants : un identifiant de serveur d'application, un identifiant de groupe, une indication de la couverture du réseau, un champ de découverte, une fenêtre temporelle de découverte.

4. Procédé selon la revendication 1, dans lequel les informations de ressources sans fil comprennent au moins l'un des éléments suivants : une fréquence, une trame/sous-trame, un intervalle de répétition, un index de ressources.

5. Procédé selon la revendication 3, dans lequel les informations d'annonce comprennent au moins un des éléments suivants : l'identificateur du dispositif D2D source, l'identificateur du dispositif D2D cible, l'identificateur de groupe, l'indication de la couverture du réseau, le support ou non du relais, le champ de la découverte, la fenêtre temporelle de découverte.

6. Procédé selon la revendication 1, dans lequel les informations de réponse sont : des informations d'accusé de réception envoyées au dispositif D2D source par un dispositif D2D cible, après que le dispositif D2D cible a reçu les informations d'annonce envoyées par le dispositif D2D source ; les informations d'accusé de réception sont envoyées par le dispositif D2D cible sur une ressource sans fil allouée ou préconfigurée.

7. Procédé selon la revendication 1, dans lequel l'information de ressource sans fil, l'information d'annonce et l'information de réponse sont envoyées par une signalisation de contrôle de ressource sans fil.

8. Procédé pour découvrir un dispositif de dispositif à dispositif, D2D, **caractérisé en ce que**, le procédé comprend :
recevoir, par une passerelle D2D, une demande envoyée par un dispositif D2D source pour découvrir un ou plusieurs dispositifs D2D de proximité, dans lequel la demande comprend un identificateur de dispositif D2D source et un identificateur de dispositif D2D cible, l'identificateur de dispositif D2D source étant utilisé pour indiquer le dispositif D2D source qui envoie la demande, l'identificateur de dispositif D2D cible étant utilisé pour indiquer un dispositif D2D cible censé être découvert ;
déterminer, par la passerelle D2D, si le dispositif D2D source indiqué par l'identificateur de dispositif D2D source dans la demande et le dispositif D2D cible indiqué par l'identificateur de dispositif D2D cible dans la demande permettent de découvrir ou d'être découvert en fonction des données d'abonnement ou des données stockées localement ;
lorsque la passerelle D2D détermine que le dispositif D2D source indiqué par l'identificateur de dispositif D2D source dans la demande et le dispositif D2D cible indiqué par l'identificateur de dispositif D2D cible dans la demande permettent de découvrir ou d'être découvert selon les données d'abonnement ou les données stockées localement, la transmission, par la passerelle D2D, d'informations d'indication à un nœud B évolué, eNB, par l'intermédiaire d'une entité de gestion mobile, MME, (201), les informations d'indication étant utilisées pour indiquer la demande de découverte d'un ou plusieurs dispositifs D2D de proximité ;
lorsque la passerelle D2D détermine que le dispositif D2D source indiqué par l'identifiant du dispositif D2D source dans la demande et le dispositif D2D cible indiqué par l'identifiant du dispositif D2D cible dans la demande ne permettent pas de découvrir ou d'être découvert selon les données d'abonnement ou les données stockées localement, la transmission, par la passerelle D2D, des informations d'indication de rejet et du motif du rejet au dispositif D2D source ;
l'attribution (304), par l'eNB, d'une ressource sans fil pour le dispositif D2D en fonction des informations d'indication, le conditionnement de la ressource sans fil en informations de ressource sans fil et la transmission des informations de ressource sans fil (202) au dispositif D2D source et au dispositif D2D cible respectivement.

9. Procédé selon la revendication 8, la demande comprend en outre au moins un des éléments suivants : un identifiant de serveur d'application, un identifiant de groupe, une indication de la couverture du réseau, un champ de découverte, une fenêtre temporelle de découverte.

10. Procédé selon la revendication 8
dans lequel les informations d'indication comprennent en outre au moins un des éléments suivants : un identificateur de groupe, une indication de couverture du réseau, un champ de découverte, une fenêtre temporelle de découverte.

11. Dispositif de dispositif à dispositif (D2D), **caractérisé en ce que** le dispositif D2D comprend : une unité d'application (61) et une unité D2D (62), dans lequel l'unité d'application (61) est configurée pour :
déterminer s'il y a une couverture réseau ;
lorsqu'il y a une couverture de réseau, envoyer une demande pour découvrir un ou plusieurs dispositifs D2D de proximité à l'unité D2D (62), dans laquelle la demande comprend un identificateur de dispositif D2D source et un identificateur de dispositif D2D cible ; l'identificateur de dispositif D2D source étant utilisé pour indiquer un dispositif D2D source qui envoie la demande, l'identificateur de dispositif D2D cible étant utilisé pour indiquer un dispositif D2D cible censé être découvert ;
recevoir des informations sur les ressources sans fil envoyées par un nœud B évolué, eNB, et envoyer des informations d'annonce par le biais de l'unité D2D (62) en fonction des informations sur les ressources sans fil et surveiller les informations de réponse ;
recevoir les informations d'indication de rejet et la raison du rejet envoyées par la passerelle D2D ;
lorsqu'il n'y a pas de couverture réseau, envoyer des informations d'annonce via l'unité D2D (62) en fonction des informations de ressources sans fil préconfigurées et surveiller les informations de réponse ;
l'unité D2D (62) est configurée pour :
envoyer, à une passerelle D2D, la demande envoyée par l'unité d'application (61) ;
envoyer les informations de ressources sans fil reçues à l'unité d'application (61) ; et
envoyer les informations d'annonce envoyées par l'unité d'application (61) et surveiller les informations de réponse.

12. Dispositif D2D selon la revendication 11, dans lequel
l'unité d'application (61) est configurée pour : déterminer s'il y a une couverture de réseau selon une interaction de signalisation avec un côté du réseau et les informations contextuelles enregistrées du côté du réseau, et, s'il y a une interaction de signalisation normale avec le côté du réseau et que les informations contextuelles du côté du réseau existent déjà, déterminer qu'il y a une couverture de réseau ; autrement, déterminer qu'il n'y a pas de couverture de réseau.

13. Dispositif D2D selon la revendication 11, dans lequel la demande comprend en outre au moins un des éléments suivants : un identificateur de serveur d'application, un identificateur de groupe, une indication de la couverture du réseau, un champ de découverte, une fenêtre temporelle de découverte,
dans lequel les informations de l'annonce comprennent en outre au moins un des éléments suivants :
un identificateur de groupe, une indication de la couverture du réseau, la prise en charge ou non du relais, une portée de découverte, une fenêtre temporelle de découverte ; et
dans laquelle les informations de réponse sont : des informations d'accusé de réception envoyées au dispositif D2D source par un dispositif D2D cible, après que le dispositif D2D cible ait reçu les informations d'annonce envoyées par le dispositif D2D source ; les informations de réponse sont envoyées par le dispositif D2D cible sur une ressource sans fil allouée ou préconfigurée.

14. Dispositif D2D selon la revendication 11, dans lequel les informations de ressources sans fil comprennent au moins l'un des éléments suivants : une fréquence, une trame/sous-trame, un intervalle de répétition, un index de ressources.

15. Dispositif D2D selon la revendication 11, dans lequel l'information de ressource sans fil, l'information d'annonce et l'information de réponse sont envoyées par une signalisation de contrôle de ressource sans fil.
